(19) Europäisches Patentamt
European Patent Office
Office européen des brevets

(11) Veröffentlichungsnummer: **0 254 681 B1**

(12) **EUROPÄISCHE PATENTSCHRIFT**

(45) Veröffentlichungstag der Patentschrift: **10.06.92**

(51) Int. Cl.5: **C09B 67/22**, C09D 7/00, C08K 5/34, //C09B63/00, C09B69/04

(21) Anmeldenummer: **87810396.9**

(22) Anmeldetag: **15.07.87**

(54) **Neue Stoffzusammensetzungen auf der Basis von Indanthronblau-Pigmenten**

(30) Priorität: **21.07.86 US 887776**

(43) Veröffentlichungstag der Anmeldung:
**27.01.88 Bulletin 88/04**

(45) Bekanntmachung des Hinweises auf die Patenterteilung:
**10.06.92 Bulletin 92/24**

(84) Benannte Vertragsstaaten:
**CH DE FR GB IT LI NL**

(56) Entgegenhaltungen:
**FR-A- 2 379 582**
**GB-A- 2 071 683**
**US-A- 3 268 532**

(73) Patentinhaber: **CIBA-GEIGY AG**
**Klybeckstrasse 141**
**CH-4002 Basel(CH)**

(72) Erfinder: **Bäbler, Fridolin, Dr.**
**Route du Couchant 12**
**CH-1723 Marly(CH)**
Erfinder: **Jaffe, Edward Ephraim, Dr.**
**3 Crenshaw Drive**
**Wilmington Delaware 19810(US)**
Erfinder: **Medinger, Bernhard, Dr.**
**Grottenweg**
**CH-1711 Giffers(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine Stoffzusammensetzung enthaltend ein Indanthronblau-Pigment und ein sulfoniertes Indanthronblauderivat sowie ihre Verwendung zum Färben von hochmolekularem organischem Material.

Indanthronblau ist als Pigment schon lange bekannt. In der JP-Pat. Publ. 71-1707 wird die Verbesserung der Lösungsmittelbeständigkeit von Indanthronblau durch die Zugabe von 30 Gew.% eines sulfonierten Kupferphthalocyanins, bezogen auf das Indanthronblau, beschrieben.

Aus der US-PS 4,310,359 ist aber bekannt, dass die Effekte, insbesondere die Nicht-Ausflockbarkeit und Kristallstabilität, welche durch Vermischen von Pigmenten mit Pigmentverbindungen, die durch Einführung von Substituenten, wie einem Sulforest, einem Sulfonamidrest, einem Aminomethylrest oder einem Phthalimidmethylrest, in organische Pigmente oder durch Vermischen von Azoverbindungen mit Erdalkalisulfonaten oder organischen Aminsalzen von Azofarbstoffen erhalten werden, nicht hinreichend sind. In der gleichen Publikation wird vorgeschlagen, das rheologische Verhalten von bestimmten Pigmenten, darunter auch C.I. Pigment Rot 177, dadurch zu verbessern, dass dem Pigment ein durch Einführung einer oder mehrerer Aminosulfonamidgruppen modifiziertes Pigment beigemischt wird.

Es ist nun gefunden worden, dass durch Zugabe eines sulfonierten Indanthronblauderivats zu einem Indanthronblau-Pigment überraschenderweise und ganz entgegen der im obenerwähnten US-Patent gegebenen Lehre das rheologische Verhalten des Produktes zu einem völlig befriedigenden Niveau verbessert wird.

Die vorliegende Erfindung betrifft demnach eine Stoffzusammensetztung enthaltend

a) ein Indanthronblau-Pigment der Formel I

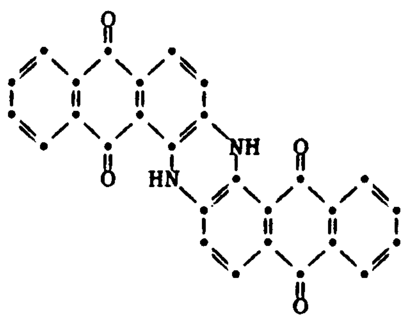

(I)

und

b) ein sulfoniertes Indanthronblauderivat der Formel II

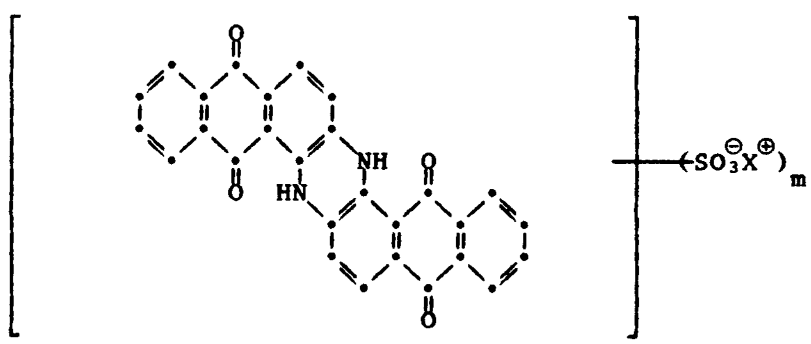

(II),

worin $X^{\oplus}$ $H^{\oplus}$ oder eine Gruppe der Formeln

$$\frac{M^{n\oplus}}{n}$$

oder $N^{\oplus}(R)(R_1)(R_2)(R_3)$ darstellt, M ein ein-, zwei- oder dreiwertiges Metallkation, n die Zahlen 1, 2 oder 3, R, $R_1$, $R_2$, $R_3$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_2$ und $R_3$ zusammen mit dem N-Atom einen Pyrrolidon-, Imidazolidin-, Piperidin-, Piperazin- oder Morpholinrest, oder $R_1$, $R_2$ und $R_3$ zusammen mit dem N-Atom einen Pyrrol-, Pyridin-, Picolin-, Pyrazin-, Chinolin- oder Isochinolinrest bilden und m eine Zahl zwischen 0,5 und 2 darstellt.

$X^{\oplus}$ ist vorzugsweise $H^{\oplus}$ oder insbesondere eine Gruppe der Formel

$$\frac{M^{n\oplus}}{n}.$$

Stellt $X^{\oplus}$ eine Gruppe der Formel

$$\frac{M^{n\oplus}}{n}$$

dar, so handelt es sich dabei beispielsweise um eine Alkali-, Erdalkali-, Aluminium- oder Uebergangsmetallkation, wie z.B. $Na^{\oplus}$, $K^{\oplus}$, $Mg^{2\oplus}$, $Ca^{2\oplus}$, $Sr^{2\oplus}$, $Ba^{2\oplus}$, $Mn^{2\oplus}$, $Cu^{2\oplus}$, $Ni^{2\oplus}$, $Cd^{2\oplus}$, $Co^{3\oplus}$, $Al^{3\oplus}$ und $Cr^{3\oplus}$, insbesondere aber um ein Alkali- oder Erdalkalikation (n = 1 oder 2) und bevorzugt um $Na^{\oplus}$ und $Ca^{2\oplus}$.

Bedeuten etwaige Substituenten $C_1$-$C_{18}$-Alkyl, so handelt es sich dabei z.B. um Methyl, Ethyl, n-Propyl, Isopropyl, n-Butyl, sec.-Butyl, tert.-Butyl, n-Pentyl, tert.-Pentyl, Hexyl, Heptyl, Octyl, Decyl, Dodecyl, Tetradecyl, Hexadecyl, Heptadecyl oder Octadecyl.

Bedeuten R, $R_1$, $R_2$ und $R_3$ $C_5$-$C_6$-Cycloalkyl, dann handelt es sich z.B. um Cyclopentyl oder insbesondere um Cyclohexyl.

Als durch $C_1$-$C_{18}$-Alkyl substituiertes Phenyl, bedeuten R, $R_1$, $R_2$ und $R_3$ vorzugsweise durch $C_{12}$-$C_{18}$-Alkyl substituiertes Phenyl.

Als Beispiele für $N^{\oplus}(R)(R_1)(R_2)(R_3)$ seien genannt: $N^{\oplus}H_4$, $N^{\oplus}H_3CH_3$, $N^{\oplus}H_2(CH_3)_2$, $N^{\oplus}H_3C_2H_5$, $N^{\oplus}H_2$-$(C_2H_5)_2$, $N^{\oplus}H_3C_3H_7$-iso, $N^{\oplus}H_3$-Cyclohexyl, $N^{\oplus}H_2$-(Cyclohexyl)$_2$, $N^{\oplus}H_2(CH_3)(C_6H_5)$, $N^{\oplus}H_3C_6H_5$, $N^{\oplus}H_3$-p-Octadecylphenyl und $N^{\oplus}(CH_3)_4$.

Bevorzugt ist m gleich 1.

Die erfindungsgemäss zuzugebenden sulfonierten Indanthronblaukomponenten (b) lassen sich nach an sich bekannten Methoden herstellen, beispielsweise durch Sulfonierung mittels Oleum, Schwefelfäure, flüssigem Schwefeltrioxid mit oder ohne Katalysatoren, wie z.B. Borsäure (vgl. z.B. DE-PS 216 891), und gegebenenfalls anschliessende Umsetzung mit den gewünschten Metallsalzen, wie z.B. Acetaten, Chloriden, Nitraten oder Sulfaten, oder mit den erfindungsgemäss in Frage kommenden Aminen. Die einzusetzende Konzentration des Sulfonierungsmittels und die auszuwählenden Reaktionsbedingungen hängen eng mit der Anzahl Sulfonsäuregruppen zusammen, welche in das Indanthronblaumolekül eingeführt werden sollen.

Die erfindungsgemässen Stoffzusammensetzungen können durch Mischen der einzelnen Indanthronblau-Komponenten a) und b) im gewünschten Mengenverhältnis oder aber durch teilweise Sulfonierung und anschliessende Umsetzung mit Metallsalzen oder Aminen wie oben beschrieben erhalten werden.

Die Mengenverhältnisse der Komponenten der erfindungsgemässen Stoffzusammensetzungen können beliebig variieren. Bevorzugte Mengenverhältnisse betragen jedoch 0,2 bis 10,0 Gew.% der Komponente b) zu 99,8 bis 90 Gew.% der Komponente a), insbesondere aber 2,0 bis 6,0 Gew.% der Komponente b) zu 98,0 bis 94,0 Gew.% der Komponente a).

Die Zugabe der Komponente b) kann vor oder nach der Konditionierung des Pigments erfolgen. Unter Konditionierung versteht man die Herstellung einer feinen Partikelform des Indanthronblaus, beispielsweise durch alkalische Umfällung (Verküpung), Schwefelsäureumfällung, Trockenmahlung mit oder ohne Salz, Lösungsmittel- oder wässrige Mahlung oder vorzugsweise Salzknetung.

Je nach Konditionierverfahren oder Applikationszweck kann es von Vorteil sein dem Pigment, neben dem erfindungsgemässen Zusatz von sulfoniertem Indanthronblau, gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder vicinale Diole, wie Dodecandiol-1,2, ferner

modifizierte Kolophoniummaleinatharze oder Fumarsäurekolophoniumharze in Betracht. Die texturverbessernden Mittel werden vorzugsweise in Mengen von 0,1-30 Gew.%, insbesondere 2-15 Gew.%, bezogen auf das Endprodukt, zugesetzt.

Die erfindungsgemässen Stoffkomposition eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseäther und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Die erwähnten hochmolekularen organischen Verbindungen können einzeln oder in Gemischen als plastische Masen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material setzt man die erfindungsgemässen Stoffzusammensetzungen vorzugsweise in einer Menge von 0,1 bis 10 Gew.% ein.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannten Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Dispergierbarkeit, hohe Transparenz, gute Ueberlackier-, Migrations-, Hitze-, Licht- und Wetterbeständigkeit aus.

Ausserdem weisen die erfindungsgemässen Stoffzusammensetzungen im Vergleich zu unsulfoniertem Indanthronblau eine höhere Farbstärke, verbesserte Rheologie, insbesondere in Lacken und Druckfarben, geringere Trenneffekte, wie Ausschwimmen bei der Mitverwendung von Weisspigmenten, geringere Flokkulationstendenz und, in Lackierungen, einen höheren Glanz auf.

Infolge der guten rheologischen Eigenschaften der erfindungsgemässen Pigmentmischungen ist es möglich, Lacke hohe Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken.

Die nachfolgenden Beispiele dienen zur Erläuterung der Erfindung.

Beispiel 1: In einen Stahlbehälter werden 1500 g Stahlkugeln mit einem Durchmesser von 1,2 cm, 150 g Nägel, 135 g Aluminiumsulfat•$16H_2O$, 15 g rohes Indanthronblau, 0,75 g Indanthronblausulfonsäure, welche nach dem in der DE-PS 216 891 beschriebenen Beispiel erhalten wird (m = 1), und 3,2 ml Cyclohexanol gegeben. Der Stahlbehälter wird verschlossen und auf einer Rollbank während 72 Stunden gerollt. Das Mahlgut wird von den Stahlkugeln und Nägeln getrennt, in 500 ml Wasser, enthaltend 2,5 ml konzentrierte Schwefelsäure, gegeben und die Pigmentsuspension bei 80-90 °C während 2 Stunden gerührt. Das Pigment wird bei 30 °C abfiltriert, der Presskuchen mit Wasser salzfrei gewaschen, bei 80 °C im Vakuum getrocknet und pulverisiert. Man erhält ein blaues Pigment, welches sehr farbstarke Färbungen hoher Sättigung bei der Applikation in Lacken ergibt.

Beispiel 2: 10 g rohes Indanthronblau und 0,3 g Indanthronblausulfonsäure (m = 1) werden bei

Raumtemperatur in 60 ml konzentrierter Schwefelsäure während 2 Stunden verrührt. Das Gemisch wird bei einer Temperatur von unter 4°C auf Eis-Wasser ausgetropft. Man rührt 2 Stunden bei Raumtemperatur, erwärmt auf 80°C, rührt weitere 2 Stunden bei 80°C, filtriert ab, wäscht mit Wasser bis neutral. Der Presskuchen wird nochmals in 200 ml Wasser suspendiert und auf 70°C erwärmt. Man gibt 1,0 g Dodecandiol-1,2 zu, rührt 30 Minuten bei 70°C, kühlt auf 30°C ab, filtriert, wäscht mit Wasser und trocknet das Pigment bei 80°C. Man erhält ein blaues Pigment, welches sich ausgezeichnet zum Einfärben von Lacken eignet und Färbungen hoher Farbstärke, hohem Glanz und hoher Sättigung mit guten Beständigkeiten ergibt.

Beispiel 3: In einen 500 ml fassenden Laborkneter werden 27 g rohes Indanthronblau, 0,7 g Indanthronblausulfonsäure (m = 1) 3,7 g hydrierte Abietinsäure, 130 g NaCl und 44 ml Diacetonalkohol gegeben. Ohne Kühlung wird die Masse während 6 Stunden geknetet. Die Temperatur steigt dabei auf 40°C. Die Knetmasse wird in 2 l Wasser ausgetragen und während 3 Stunden verrührt. Das Pigment wird abfiltriert und mit Wasser salzfrei gewaschen, bei 80°C getrocknet und gepulvert. Man erhält ein blaues Pigment, das sich ausgezeichnet in Kunststoffe und Lacke einarbeiten lässt und Färbungen hoher Farbstärke und Sättigung mit guten Beständigkeiten ergibt. Die damit hergestellten Lacke weisen ausgezeichnete rheologische Eigenschaften auf und zeigen keine Flokkulationstendenz.

Beispiel 4: Verfährt man analog wie in Beispiel 3 beschrieben, verwendet aber anstelle von 0,7 g 1,4 g Indanthronblausulfonsäure, so erhält man ein blaues Pigment mit analog guten koloristischen und noch besseren rheologischen Eigenschaften.

Beispiel 5: Verfährt man analog wie in Beispiel 3 beschrieben, verwendet aber anstelle von 0,7 g 2,4 g Indanthronblausulfonsäure, so erhält man ein blaues Pigment mit analog guten koloristischen und noch besseren rheologischen Eigenschaften.

Beispiel 6: Verfährt man analog wie in Beispiel 3 beschrieben, verwendet aber anstelle von 130 g Kochsalz eine Mischung von 120 g Kochsalz und 15 g $CaCl_2$, so erhält man ein Indanthronblau-Pigment, enthaltend ca. 2.7% an Indanthronblausulfonsäure-Ca-Salz, mit analog guten Pigmenteigenschaften.

Beispiel 7: Verfährt man analog wie in Beispiel 3 beschrieben, verwendet aber anstelle von 130 g Kochsalz eine Mischung von 120 g Kochsalz mit 10 g Aluminiumsulfat, so erhält man ein Indanthronblau-Pigment, enthaltend ca. 2,7 % Indanthronblausulfonsäure-Al-Salz, mit analog guten Eigenschaften.

Beispiel 8: Verfährt man analog wie in Beispiel 4 beschrieben, verwendet aber anstelle von 130 g Kochsalz eine Mischung von 120 g Kochsalz mit 10 g $SrCl_2$, so erhält man ein blaues Pigment, enthaltend ca. 5.5 % Indanthronblausulfonsäure-Sr-Salz, mit analog guten Pigmenteigenschaften.

Beispiel 9: Verfährt man analog wie in Beispiel 3 beschrieben, verwendet aber anstelle von 130 g Kochsalz eine Mischung von 120 g Kochsalz mit 10 g $BaCl_2$, so erhält man ein blaues Pigment, enthaltend ca. 5,5 % Indanthronblausulfonsäure-Ba-Salz, mit analog guten Pigmenteigenschaften.

Beispiel 10: Verfährt man analog wie in Beispiel 4 beschrieben, verwendet aber anstelle von 130 g NaCl eine Mischung von 120 g NaCl und 15 g $MgCl_2$,so erhält man ein Pigment, enthaltend ca. 5,5 % Indanthronblausulfonsäure-Mg-Salz, mit analog guten Eigenschaften.

Beispiel 11: In einen 500 ml fassenden Laborkneter werden 27,5 g rohes Indanthronblau, 3,7 g hydrierte Abietinsäure, 130 g Kochsalz und 44 ml Diacetonalkohol gegeben. Ohne Aussenkühlung wird die Masse während 6 Stunden geknetet. Die Temperatur steigt dabei auf 40°C. Die Knetmasse wird auf 2 l Wasser ausgetragen und während 3 Stunden verrührt. Das Pigment wird abfiltriert, mit Wasser salzfrei gewaschen und nochmals in 300 ml Wasser suspendiert. Die Suspension wird auf 70°C erwärmt, dann werden 1,4 g Indanthronblausulfonsäure-Na-Salz (m = 1) zugegeben und 30 Minuten bei 70°C gerührt. Danach wird die Pigmentsuspension auf 30°C abgekühlt und das Pigment abfiltriert, mit Wasser gewaschen, bei 80°C getrocknet und gepulvert. Man erhält ein blaues Pigment, welches bei der Einarbeitung in Lacke ausgezeichnete rheologische Eigenschaften, hohe Farbstärke und Sättigung und ausgezeichnete Wetterbeständigkeiten zeigt. In Kunststoffen eingefärbt weist das Pigment gute Dispergiereigenschaften auf.

Beispiel 12: Verfährt man analog wie in Beispiel 11 beschrieben, unterlässt jedoch die Zugabe von 3,7 g hydrierter Abietinsäure, so erhält man ein sehr farbstarkes blaues Pigment mit ausgezeichneten rheologischen Eigenschaften und geringer Flokkulationstendenz bei der Einarbeitung in Lacke.

Beispiel 13: In einer 500 ml fassenden Glasperlmühle mit einem Durchmesser von 8 cm werden 13,5 g rohes Indanthronblau, 1,5 g feinteilige hydrierte Abietinsäure, 0,7 g Indanthronblausulfonsäure-Na-Salz (m = 1), 125 g Wasser, 400 g Glaskugeln mit einem Durchmesser von 3,5-4,0 mm während 12 Stunden bei 320 U/Min. unter Aussenkühlung verrührt. Die Umlaufgeschwindigkeit des dazu verwendeten Metallflügelrührers von 5,5 cm Durchmesser beträgt 0,92 m/sec. Die Pigmentsuspension wird von den Glaskugeln, welche mit Wasser gewaschen werden, getrennt, dann abfiltriert. Man trocknet das Pigment bei 80°C und erhält 13.5 g blaues Pigment, enthaltend ca. 4 % Indanthronblausulfonsäure-Na-Salz, welches in Lacke eingearbeitet, sehr farbstarke, flokkulationsbeständige Färbungen hoher Sättigung und mit guten Beständigkeiten ergibt.

Beispiel 14: Verfährt man analog wie in Beispiel 13 beschrieben, verwendet aber anstelle von 125 g Wasser eine Mischung von 100 g Wasser und 25 g Ethylenglykol, so erhält man ein Pigment mit analog guten koloristischen Eigenschaften und sehr guter Dispergierbarkeit.

Beispiel 15: In einen 500 ml fassenden Laborkneter werden 27 g rohes Indanthronblau, 130 g NaCl und 44 ml Diacetonalkohol gegeben. Unter Aussenkühlung mit Wasser wird die Masse während 6 $\frac{1}{2}$ Stunden geknetet. Danach wird die Knetmasse in 2 l Wasser ausgetragen und während 3 Stunden verrührt. Das Pigment wird abfiltriert und mit Wasser salzfrei gewaschen. Der feuchte Presskuchen wird nochmals in 400 ml Wasser suspendiert. Man gibt 1,4 g Indanthronblausulfonsäure-n-butylammoniumsalz, erhalten durch Umsetzung von Indanthronblausulfonsäure mit n-Butylamin (m = 1), und 0,6 g Laurylamin zur Suspension, erwärmt auf 80 °C, rührt 30 Minuten bei 80 °C und kühlt auf 20 °C ab. Das Pigment wird abfiltriert, gewaschen, bei 80 °C getrocknet und gepulvert. Man erhält ein bei der Applikation in Lacken sehr farbstarkes, flokkulationsbeständiges Pigment, welches blaue Färbungen hoher Sättigung ergibt.

Beispiel 16: 15 g Leukoindanthron in Form eines feuchten Presskuchens werden in eine Mischung bestehend aus 150 g Wasser, 9 g 50%iger Natronlauge, 1,2 g hydrierter Abietinsäure und 1,2 g Natriumdithionit eingetragen. Die wässerige Suspension des Leukoindanthrons wird nach der Zugabe von 220 g Glasperlen (Durchmesser ca. 1 mm) mit einem hochtourigen Rührer unter Luftzutritt bei ca. 2000 U/Min. und 25-30 °C verrührt. Die Pigmentsuspension wird von den Glasperlen, welche mit 300 ml Wasser gewaschen werden, abgetrennt. Die vereinigten Suspensionen werden mit verdünnter Salzsäure auf pH 5,0 gestellt. Danach wird das Pigment abfiltriert, mit Wasser gewaschen und nochmals in 200 ml Wasser suspendiert. Man gibt 0.75 g Indanthronblausulfonsäure-Na-Salz (m = 1) zu, erwärmt auf 70 °C, rührt 30 Minuten bei 70 °C, kühlt auf 25 °C, filtriert das Pigment ab, wäscht den Presskuchen mit Wasser und trocknet bei 80 °C. Das gepulverte Pigment ergibt bei den Einarbeitung in Lacke sehr farbstarke blaue Färbungen mit ausgezeichneten Beständigkeiten.

Beispiel 17: Verfährt man analog wie im Beispiel 15 beschrieben, verwendet aber anstelle von 1,4 g Indanthronblausulfonsäure-n-butylammoniumsalz 2,0 g Indanthronblausulfonsäureammoniumsalz, so erhält man ein Pigment mit analog guten Eigenschaften.

Beispiel 18: Verfährt man analog wie im Beispiel 17 beschrieben, verwendet aber anstelle von 2,0 g Indanthronblausulfonsäureammoniumsalz 1,8 g des Tetramethylammoniumsalzes der Indanthronblausulfonsäure, so erhält man ein Pigment mit analog guten Eigenschaften.

Beispiel 19: Verfährt man analog wie im Beispiel 17 beschrieben, verwendet aber anstelle von 2,0 g des Ammoniumsalzes 3,6 g des N,N-Dimethyl-phenylammoniumsalzes der Indanthronblausulfonsäure (m = 0,5), so erhält man ein Pigment mit analog guten Eigenschaften.

Beispiel 20: Verfährt man analog wie im Beispiel 7 beschrieben, verwendet aber 0,7 g Indanthronblausulfonsäure (m = 2), so erhält man ein Pigment mit analog guten Eigenschaften.

Beispiel 21: Verfährt man analog wie im Beispiel 4 beschrieben, verwendet aber anstelle von 3,7 g nur 0,9 g hydrierte Abietinsäure, so erhält man ein Pigment mit ausgezeichneten Eigenschaften.

Beispiel 22: Eine Mischung von
130 Teilen Steatitkugeln (Ø = 8 mm)
47,5 Teilen eines thermohärtenden Acryllacks, bestehend aus
41,3 Teilen Acrylharz ®VIACRYL VC 373, 60 % (VIANOVA Kunstharz AG),
16,3 Teilen Melaminharz ®MAPRENAL TTX, 55 % (HOECHST AG),
32,8 Teilen Xylol,
4,6 Teilen Ethylglykolacetat,
2,0 Teilen Butylacetat und
1,0 Teil ®Silikonöl A, 1 % in Xylol (BAYER AG), und
2,5 Teile des nach Beispiel 1 erhaltenen Indanthronblau-Pigmentgemisches
wird in einer 200 ml Glasflasche mit "Twist-Off"-Verschluss während 72 Stunden auf dem Rollgestell dispergiert. Nach Abtrennen der Steatitkugeln werden
8,0 Teile der so dispergierten Volltonmischung,
0,6 Teile Aluminiumpaste ®ALCOA (60-65 % Al-Gehalt, Aluminium Corp. of America)
1,0 Teil Methylethylketon und
18,4 Teile des obigen thermohärtenden Acryllacks
gut vermischt, auf Aluminiumbleche gespritzt und anschliessend während 30 Minuten bei 130 °C eingebrannt.

Man erhält sehr farbstarke blaue Metalleffektlackierungen mit ausgezeichneten Beständigkeiten.

Verwendet man anstelle des Pigmentes gemäss Beispiel 1 ein Pigment gemäss den Beispielen 2 bis 16, so erhält man ebenso hochwertige Ausfärbungen.

Beispiel 23: Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%-ig in Xylol, 36 g Melaminharz ®SUPER-BECKAMIN 13-501 (Reichhold Chemie AG) 50%-ig in Xylol:Butamol (2:1-Gemisch), 2 g Xylol und 2 g Ethylenglykolmonomethylether, und 2,5 g der nach Beispiel 3 erhaltenen Indanthronblau-Pigmentmischung werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 60 g Titandioxid ®KRONOS RN 59 (KRONOS Titan GmbH) und weiteren 24,0 g des Alkydmelamineinbrennlacks vermischt, auf Aluminiumbleche gespritzt und anschliessend während 30 Minuten bei 130°C eingebrannt. Man erhält sehr farbstarke blaue Färbungen mit ausgezeichneten Beständigkeiten.

Beispiel 24: Eine Mischung bestehend aus
130 Teilen Steatigkugeln (Ø = 8 mm)
24,5 Teilen Alkyd-Lacksystem ®ALFTALAT AC 451 M mit 60 % Festkörpergehalt (HOECHST AG),
18,7 Teilen Xylol und
4,3 Teilen des nach Beispiel 21 erhaltenen Indanthronblau-Pigmentgemisches
wird in einer 200 ml Glasflasche mit "Twist-Off"-Verschluss während 72 Stunden auf dem Rollgestell dispergiert. Danach werden die Steatitkugeln abgetrennt.

Das Fliessverhalten der so hergestellten Lackanreibung, welche 9 Gew.-% Pigment und 40,5 Gew.-% Gesamtfestkörper enthält und deren Pigment/Bindemittel-Verhältnis 0,3 beträgt, kann mit einem HAAKE-Viskosimeter ®Rotovisco RV 12 ermittelt werden (Messtemperatur: 25°C; Mess-System: SV-SP, Scherbereich: D = 0 bis 100 [l/s]. Zur einfachen Charakterisierung der Fliesskurve können aus einer optimalen Regressionskurve ermittelte Viskositätswerte bei D = 0 [l/s] und 100 [l/s] angegeben werden.

Für die Lackanreibung mit dem Pigmentgemisch gemäss Beispiel 21 werden folgende Viskositätswerte ermittelt:
bei D = 10 [l/s]: 177 mPa•s
bei D = 100 [l/s]: 127 mPa•s

Eine Lackanreibung enthaltend als Pigment nur Indanthronblau (ohne Zusatz von Indanthronblausulfonsäure-Natriumsalz) ergibt folgende Viskositätswerte:
bei D = 10 [l/s]: 1274 mPa•s
bei D = 100 [l/s]: 211 mPa•s

Beispiel 25: Eine Mischung bestehend aus 1,0 g der nach Beispiel 4 erhaltenen Indanthronblau-Pigmentmischung, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert. Das so erhaltene Granulat wird auf der Spritzgussmaschine (Allround Aarburg 200) bei 220°C zu Platten verspritzt und 5 Minuten bei 180 °C nachgepresst. Die Pressplatten weisen farbstarke blaue Nuancen mit ausgezeichneten Beständigkeiten auf.

Beispiel 26: 0,6 g der gemäss Beispiel 6 erhaltenen Indanthronblau-Pigmentmischung wird mit 67 g Polyvinylchlorid, 33 g Dioctylphthalat, 2 g Dibutylzinndilaurat und 2 g Titandioxid vermischt und auf einem Walzenstuhl während 15 Minuten bei 160°C zu einer dünnen Folie verarbeitet. Die so erzeugte blaue PVC-Folie ist sehr farbstark, migrations- und lichtbeständig.

Beispiel 27: 1000 g Polypropylengranulat (®DAPLEN PT-55, Chemie LINZ) und 20 g eines 50%-igen Pigmentpräparates, bestehend aus 10 g der nach Beispiel 7 erhaltenen Indanthronblau-Pigmentmischung und 10 g Mg-Behenat, werden in einer Mischtrommel intensiv vermischt. Das so behandelte Granulat wird bei 260 bis 285°C nach dem Schmelzspinnverfahren versponnen. Man erhält blaugefärbte Fasern mit sehr guten Licht- und textilen Echtheiten.

Beispiel 28: In je eine Lösung bestehend aus 21,5 g Celluloseacetobutyrat (25%-ig in Butylacetat), 1 g Zirkoniumoctoat 6 (®NUODEX), 12 g aromatisches Lösungsmittel SOLVESSO 150 (ESSO), 17,5 g Butylacetat, 13 g Xylol werden

(A) 8 g der nach Beispiel 4 erhaltenen Indanthronblau-Pigmentmischung, bzw.
(B) 23 g Titandioxid ®KRONOS RN 59 (KRONOS Titan GmbH)

auf einem Dispergierapparat (®DISPERMAT, Hediger, Bassersdorf) mittels Glaskugeln (Ø 1 mm) gut dispergiert.

Nach Entfernen der Glaskugeln werden die beiden Dispersionen je mit 24 g Polyesterharz ®DYNAPOL H 700 (60%-ig, DYNAMIT NOBEL) und 3 g Melaminharz ®MAPRENAL MF 650 (55%-ig, HOECHST AG) vermischt.

Danach werden 12,5 g der blauen mit 45,0 g der weissen Pigmentlacksuspension gut miteinander vermischt. Der auf diese Art erhaltene Pigmentlack wird auf Aluminiumbleche gespritzt und anschliessend

bei 130 ° C eingebrannt. Man erhält farbstarke Färbungen mit ausgezeichnetem Glanzverhalten.

**Patentansprüche**

1. Stoffzusammensetzung enthaltend
   a) ein Indanthronblau-Pigment der Formel I

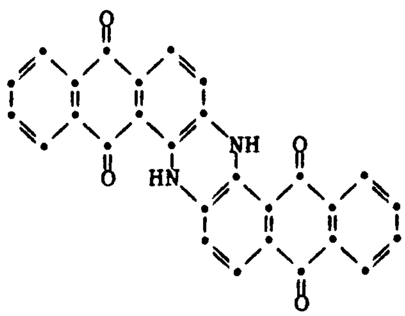

(I)

und
b) ein sulfoniertes Indanthronblauderivat der Formel II

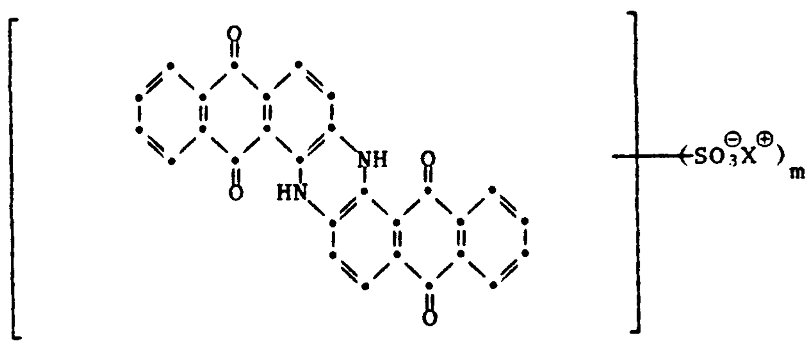

(II),

worin $X^{\oplus}$ $H^{\oplus}$ oder eine Gruppe der Formeln

$$\frac{M^{n\oplus}}{n}$$

oder $N^{\oplus}(R)(R_1)(R_2)(R_3)$ darstellt, M ein ein-, zwei- oder dreiwertiges Metallkation, n die Zahlen 1, 2 oder 3, R, $R_1$, $R_2$, $R_3$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_2$ und $R_3$ zusammen mit dem N-Atom einen Pyrrolidon-, Imidazolidin-, Piperidin-, Piperazin- oder Morpholinrest, oder $R_1$, $R_2$ und $R_3$ zusammen mit dem N-Atom einen Pyrrol-, Pyridin-, Picolin-, Pyrazin-, Chinolin- oder Isochinolinrest bilden und m eine Zahl zwischen 0,5 und 2 darstellt.

2. Stoffzusammensetzung gemäss Anspruch 1, dadurch gekennzeichnet, dass im sulfonierten Indanthronblauderivat der Formel II m gleich 1 ist.

3. Stoffzusammensetzung gemäss Anspruch 1, dadurch gekennzeichnet, dass im sulfonierten Indanthronblauderivat der Formel II $X^{\oplus}$ eine Gruppe der Formel

$$\frac{M^{n\oplus}}{n}$$

bedeutet, worin $M^{n\oplus}$ ein Alkali- oder Erdalkalikation und n die Zahlen 1 oder 2 bedeuten.

**4.** Stoffzusammensetztung gemäss Anspruch 3, worin $M^{n\oplus}$ ein Natrium-oder ein Calciumkation bedeutet.

**5.** Stoffzusammensetztung gemäss Anspruch 1, worin das Mengenverhältnis der Komponente a) zur Komponente b) 99,8 bis 90 Gew.% zu 0,2 bis 10,0 Gew.% beträgt.

**6.** Verfahren zum Färben von hochmolekularem organischem Material, dadurch gekennzeichnet, dass eine Stoffzusammensetzung gemäss Anspruch 1 verwendet wird.

**7.** Hochmolekulares organisches Material enthaltend eine Stoffzusammensetzung gemäss Anspruch 1.

## Claims

**1.** A composition comprising
a) an indanthrone blue pigment of formula I

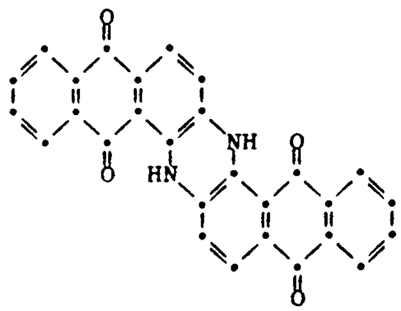

(I)

and
b) a sulfonated indanthrone blue derivative of formula II

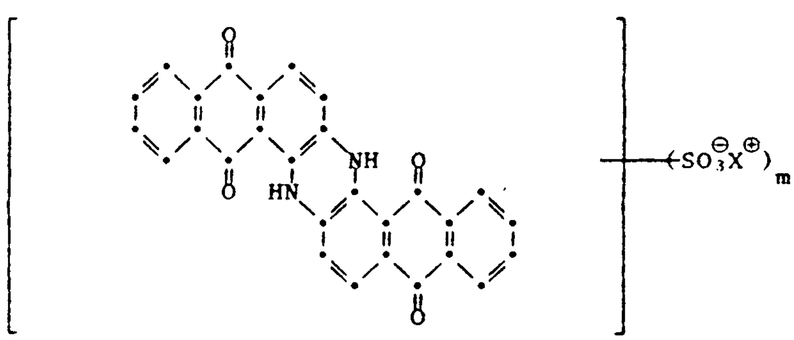

(II),

wherein $X^{\oplus}$ is $H^{\oplus}$ or a group of the formula

$$\frac{M^{n\oplus}}{n}$$

or $N^{\oplus}(R)(R_1)(R_2)(R_3)$, M is a monovalent, divalent or trivalent metal cation, n is the number 1, 2 or 3, each of R, $R_1$, $R_2$ and $R_3$ independently is hydrogen, $C_1$-$C_{18}$alkyl, $C_5$-$C_6$cycloalkyl, unsubstituted phenyl or phenyl which is substituted by $C_1$-$C_{18}$alkyl, or $R_2$ and $R_3$, together with the nitrogen atom, are a pyrrolidine, imidazolidine, piperidine, piperazine or morpholine radical, or $R_1$, $R_2$ and $R_3$, together with the nitrogen atom, are a pyrrole, pyridine, picoline, pyrazine, quinoline or isoquinoline radical, and m is a number from 0.5 to 2.

**2.** A composition according to claim 1, wherein m is 1 in the sulfonated indanthrone blue derivative of formula II.

**3.** A composition according to claim 1, wherein $X^{\oplus}$ in the sulfonated indanthrone blue derivative of formula II is a group of the formula

$$\frac{M^{n\oplus}}{n}$$

wherein $M^{n\oplus}$ is an alkali metal cation or an alkaline earth metal cation and n is the number 1 or 2.

**4.** A composition according to claim 3, wherein $M^{n\oplus}$ is a sodium or calcium cation.

**5.** A composition according to claim 1, wherein the ratio of component a) to component b) is 99.8 to 90 % by weight to 0.2 to 10.0 % by weight.

**6.** A method of colouring high molecular weight organic material, which comprises using a composition according to claim 1.

**7.** A high molecular weight organic material containing a composition according to claim 1.

## Revendications

**1.** Composition qui contient :

a) un pigment de bleu d'indanthrone répondant à la Formule I :

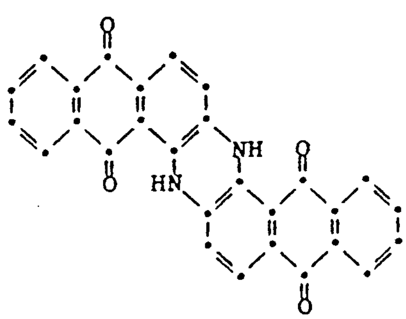

(I)

et

b) un dérivé sulfoné de bleu d'indanthrone répondant à la Formule II :

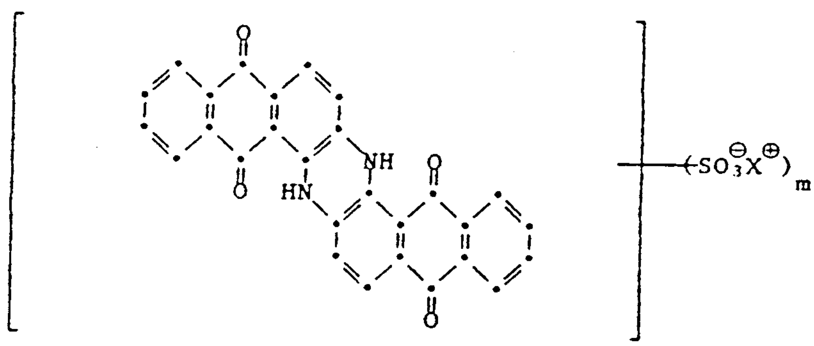

(II)

dans laquelle $X^{\oplus}$ représente $H^{\oplus}$ ou un radical

$$\frac{M^{n\oplus}}{n}$$

ou $N^{\oplus}$ (R) ($R_1$) ($R_2$) ($R_3$), M représente un cation de métal univalent, divalent ou trivalent, n désigne un nombre égal à 1, à 2 ou à 3, R, $R_1$, R2 et R3 représentent chacun, indépendamment les uns des autres, l'hydrogène, un alkyle en $C_1$-$C_{18}$, un cycloalkyle en $C_5$ ou $C_6$, un phényle non substitué ou un phényle porteur d'un alkyle en $C_1$-$C_{18}$, ou $R_2$ et $R_3$ forment ensemble, et avec l'atome d'azote, un radical de pyrrolidine, d'imidazolidine, de pipéridine, pipérazine ou de morpholine, ou $R_1$, $R_2$ et $R_3$ forment ensemble, et avec l'atome d'azote, un radical de pyrrole, de pyridine, de picoline, de pyrazine, de quinoléine ou d'isoquinoléine, et m désigne un nombre compris entre 0,5 et 2.

**2.** Composition selon la revendication 1 caractérisée en ce que, dans le dérivé sulfoné de bleu d'indanthrone répondant à la Formule II, m est égal à 1.

**3.** Composition selon la revendication 1 caractérisée en ce que, dans le dérivé sulfoné de bleu d'indanthrone répondant à la Formule II, le symbole $X^{\oplus}$ représente un radical

$$\frac{M^{n\oplus}}{n}$$

dans lequel $M^{n\oplus}$ représente un cation de métal alcalin ou de métal alcalino-terreux et n désigne le nombre 1 ou le nombre 2.

**4.** Composition selon la revendication 3 dans laquelle $M^{n\oplus}$ représente un cation de sodium ou de calcium.

**5.** Composition selon la revendication 1 dans laquelle le rapport, en quantités, de la composante a) à la composante b) est de 99,8-90 % en poids pour 0,2-10,0 % en poids.

**6.** Procédé pour colorer des matières organiques à haut poids moléculaire, procédé caractérisé en ce qu'on utilise une composition selon la revendication 1.

**7.** Matières organiques à haut poids moléculaire qui contiennent une composition selon la revendication 1.